# EUROPEAN PATENT SPECIFICATION

(11) **EP 3 305 638 B1**
(45) Date of publication and mention of the grant of the patent: **26.06.2019**
(21) Application number: 17194446.5
(22) Date of filing: 02.10.2017
(51) Int. Cl.: B62J 17/02, B62J 6/02

(54) **STRADDLED VEHICLE**
GRÄTSCHSITZFAHRZEUG
VÉHICULE À ENFOURCHER

(30) Priority: 04.10.2016 JP 2016196791
(43) Date of publication of application: 11.04.2018
(73) Proprietor: Yamaha Hatsudoki Kabushiki Kaisha, Iwata-shi, Shizuoka-ken 438-8501 (JP)
(72) Inventor: NIINO, Kazuyuki, Shizuoka, 438-8501 (JP); HONDA, Munehisa, Tokyo, 171-0033 (JP)
(74) Representative: Moreland, David

(56) References cited:
- EP-A1- 2 669 162
- EP-A1- 2 692 618
- EP-A1- 2 876 027

## Description

### FIELD OF INVENTION

The present invention relates to a straddle-type vehicle or saddle-ride type vehicle. In particular, but not exclusively, the present invention relates to a straddled vehicle including a windshield.

### BACKGROUND TO INVENTION

During travel of a straddled vehicle such as a motorcycle, travelling winds hit the rider. Providing a windshield has been proposed to prevent travelling winds from hitting or buffeting the rider. Such a straddled vehicle is disclosed in JP 2004-168306 A, for example.

The straddled vehicle of the above publication includes a windshield formed integrally with the front cover surrounding the headlight. As such, the windshield extends from the rear edge of the front cover, where the windshield is contiguous with the general shape of the front cover. The front cover is provided around the headlight. Thus, the front cover represents the portions of the exterior of the straddled vehicle to which people tend to pay attention. In other words, the appearance of the front cover has the effect of attracting people's attention. Thus, it can be assumed that, similar to the appearance of the front cover, the appearance of the windshield attached to the front cover has the effect of attracting people's attention.

However, since the windshield of the straddled vehicle of the above publication is formed integrally with the front cover, the shape of the windshield is restricted by the shape of the front cover. This means a small degree of freedom in designing the shape of the windshield. This makes it difficult to improve attractiveness imparted by virtue of the shape of the windshield.

It may be possible to design the shape of the windshield with only attractiveness in mind without considering the shape of the front cover. Even in such cases, a sufficient level of the windshield effect of the windshield (i.e. the original function of the windshield) must be provided.

It is an object of at least one embodiment of at least one aspect of the present invention to obviate or at least mitigate one or more problems or disadvantages in the prior art. An object of at least one embodiment of at least one aspect of at least one aspect of the present invention is to seek to provide a sufficient level of the windshield effect of a windshield of a straddled vehicle while ensuring freedom in designing the shape of the windshield.

The inventors of the present invention did extensive research to find a way to provide a sufficient level of the windshield effect of the windshield while ensuring freedom in designing the shape of the windshield. They reached the finding that the windshield may be attached to a member positioned above the front cover, rather than the windshield being attached to the front cover. The present invention was made based on this finding.

### SUMMARY OF INVENTION

According to a first aspect of the present invention there is provided a straddled vehicle according to the appended claims.

According to a second aspect of the present invention there is provided a straddled vehicle which includes at least one of: a vehicle body frame, a headlight, an upper front cover, an upper support cover, and a windshield. The upper front cover may be attached to the vehicle-body frame. At least a part of the upper front cover may be located higher than the headlight as viewed from a front of the vehicle. The upper support cover may be attached to the upper front cover. At least a part of the upper support cover may be located higher than the upper front cover as viewed from the front of the vehicle. The windshield may be attached to the upper support cover. At least a part of the windshield may be located higher than the upper support cover as viewed from the front of the vehicle. At least a part of the upper support cover may overlap the upper front cover as viewed from a top of the vehicle. The part of the upper support cover overlapping the upper front cover as viewed from the top of the vehicle may be located higher than the upper front cover. At least a part of the windshield may overlap the upper support cover as viewed from the top of the vehicle. The part of the windshield overlapping the upper support cover as viewed from the top of the vehicle may be located higher than the upper support cover. As viewed from the top of the vehicle, a forwardmost point of the windshield may be located rearward of a forwardmost point of the upper support cover. A rearmost point of the windshield may be located higher than the forwardmost point of the windshield. The rearmost point of the windshield may be located higher than a rearmost point of the upper support cover.

In the above-described straddled vehicle, the windshield may be attached to the upper front cover with the upper support cover provided therebetween. This may reduce restriction of the shape of the windshield by the shape of the upper front cover. This seeks to ensure freedom in designing the shape of the windshield.

In the above-described straddled vehicle, the rearmost point of the windshield may be located higher than the forwardmost point of the windshield and/or higher than the rearmost point of the upper support cover. This seeks to provide a sufficient level of the windshield effect of the windshield.

Preferably, the headlight is not limited to any particular shape. As viewed from the front of the vehicle, at least a part of the headlight may be located at the center of the vehicle as determined along the left-right direction of the vehicle. Implementations where at least a part of the headlight may be located at the center of the vehicle include implementations where at least a part of the headlight may be located on the center line passing through the center of the vehicle as determined along the left-right direction of the vehicle as viewed from the front of the vehicle, for example. Implementations where at least a part of the headlight is located on the center line as viewed from the front of the vehicle may include implementations where at least a part of the headlight may overlap the center line as viewed from the front of the vehicle, for example.

The headlight may be, for example, attached to the vehicle-body frame (e.g. head pipe). In such implementations, the headlight may be directly attached to the vehicle-body frame (e.g. head pipe), or may be indirectly attached thereto with a stay or the like provided therebetween, for example.

Preferably the upper front cover is not limited to a particular shape as long as at least a part of the upper front cover is located higher than the headlight as viewed from the front of the vehicle. Implementations where at least a part of the upper front cover may be located higher than the headlight as viewed from front of the vehicle may include implementations where the rearmost point of the upper front cover may be located higher than the headlight, for example. If the rearmost point of the upper front cover is located higher than the headlight, the forwardmost point of the upper front cover may be located lower than the rearmost point of the upper front cover.

At least a part of the bottom edge of the upper front cover may be located lower than the top edge of a lens included in the headlight as viewed from the front of the vehicle. At least a part of the bottom edge of the upper front cover may extend along the top edge of a lens surface included in the lens of the headlight.

The dimension of the upper front cover as measured in the left-right direction of the vehicle as viewed from the front of the vehicle may be larger than the dimension of the headlight as measured in the left-right direction of the vehicle as viewed from the front of the vehicle, for example. If the dimension of the upper front cover as measured in the left-right direction of the vehicle as viewed from the front of the vehicle varies along the top-bottom direction of the vehicle, the dimension of the upper front cover as measured in the left-right direction of the vehicle as viewed from the front of the vehicle may be represented by the maximum dimension of the upper front cover as measured in the left-right direction of the vehicle as viewed from the front of the vehicle. Similarly, if the dimension of the headlight as measured in the left-right direction of the vehicle as viewed from the front of the vehicle varies along the top-bottom direction of the vehicle, the dimension of the headlight as measured in the left-right direction of the vehicle as viewed from the front of the vehicle may be represented by the maximum dimension of the headlight as measured in the left-right direction of the vehicle as viewed from the front of the vehicle. The dimension of the headlight as measured in the left-right direction of the vehicle as viewed from the front of the vehicle may be represented by the dimension of the lens surface of the lens of the headlight as measured in the left-right direction of the vehicle, for example.

The upper front cover may not be attached to the vehicle-body frame only. For example, the upper front cover may be attached to the vehicle-body frame and attached to the side cover.

The upper front cover may be directly attached to the vehicle-body frame, or may be attached to the vehicle-body frame with a stay or the like provided therebetween, for example.

Preferably, the upper support cover is not limited to a particular shape as long as at least a part of the upper support cover is located higher than the upper front cover as viewed from the front of the vehicle. Implementations where at least a part of the upper support cover is may be located higher than the upper front cover as viewed from the front of the vehicle may include implementations where the rearmost point of the upper support cover may be located higher than the upper front cover, for example.

At least a part of the bottom edge of the upper support cover may be located lower than the bottom edge of the upper front cover as viewed from the front of the vehicle. The forwardmost point of the upper support cover may be located forward of the forwardmost point of the upper front cover as viewed from the side of the vehicle.

The dimension of the upper support cover as measured in the left-right direction of the vehicle as viewed from the front of the vehicle may be larger than the dimension of the headlight as measured in the left-right direction of the vehicle as viewed from the front of the vehicle, for example. This may seek to make it easier to adopt a windshield to be attached to the upper support cover that has a relatively large dimension as measured in the left-right direction of the vehicle.

The dimension of the upper support cover as measured in the left-right direction of the vehicle as viewed from the front of the vehicle may be smaller than the dimension of the upper front cover as measured in the left-right direction of the vehicle as viewed from the front of the vehicle, for example. This may help prevent the dimension, as measured in the left-right direction of the straddled vehicle, of the portion surrounding the headlight (i.e. front portion of the straddled vehicle) from increasing excessively. If the dimension of the upper support cover as measured in the left-right direction of the vehicle as viewed from the front of the vehicle varies along the top-bottom direction of the vehicle, the dimension of the upper support cover as measured in the left-right direction of the vehicle as viewed from the front of the vehicle may be represented by the maximum dimension of the upper support cover as measured in the left-right direction of the vehicle as viewed from the front of the vehicle.

The dimension of the upper support cover as measured in the left-right direction of the vehicle as viewed from the front of the vehicle need not be constant along the top-bottom direction of the vehicle. For example, as viewed from the front of the vehicle, the dimension of the top edge of the upper support cover as measured in the left-right direction of the vehicle may be larger than the dimension of the bottom edge of the upper support cover as measured in the left-right direction of the vehicle. The top edge of the upper support cover may include the uppermost point of the upper support cover. The bottom edge of the upper support cover may include the lowermost point of the upper support cover.

The dimension of the upper support cover as measured in the left-right direction of the vehicle as viewed from the top of the vehicle need not be constant along the front-rear direction of the vehicle. For example, as viewed from the top of the vehicle, the dimension of the rear edge of the upper support cover as measured in the left-right direction of the vehicle may be larger than the dimension of the front edge of the upper support cover as measured in the left-right direction of the vehicle. If the dimension of the upper support cover as measured in the left-right direction of the vehicle as viewed from the top of the vehicle varies along the front-rear direction of the vehicle, the dimension of the upper support cover as measured in the left-right direction of the vehicle as viewed from the top of the vehicle may be represented by the maximum dimension of the upper support cover as measured in the left-right direction of the vehicle as viewed from the top of the vehicle. The rear edge of the upper support cover may include the rearmost point of the upper support cover. The front edge of the upper support cover may incude the forwardmost point of the upper support cover.

At least a part of the upper support cover as viewed from the top of the vehicle may overlap the headlight from above.

The forwardmost point of the upper support cover may be located at the center of the front edge of the upper support cover as determined along the left-right direction of the vehicle, for example. Implementations where the forwardmost point of the upper support cover is located at the center of the front edge of the upper support cover as determined along the left-right direction of the vehicle may include implementations where the forwardmost point of the upper support cover may be located on the center line passing through the center of the vehicle as determined along the left-right direction of the vehicle as viewed from the top of the vehicle, for example. Implementations where the forwardmost point of the upper support cover is located on the center line as viewed from the top of the vehicle may include implementations where the front edge of the upper support cover may cross the center line as viewed from the top of the vehicle, for example.

Implementations where the upper support cover is attached to the upper front cover may include implementations where the upper support cover may be fixed to the upper front cover, as well as implementations where the upper support cover may be moveably mounted on the upper front cover. The upper support cover may be moved relative to the upper front cover by using a drive source such as a motor, for example. In implementations where the upper support cover is movably mounted on the upper front cover, at least a part of the upper support cover may only be required to be located higher than the upper front cover as viewed from the front of the vehicle when the upper support cover is at a specific position within its range of movement.

The upper support cover need not be attached to the upper front cover only. The upper support cover may be attached to the upper front cover and attached to another member.

At least a part of the upper support cover may be suitably located higher than the upper front cover. That is, it may not be that the entire upper support cover need be located higher than the upper front cover. The portions of the upper support cover that are located higher than the upper front cover may not need tobe in contact with the upper front cover.

As viewed from the top of the vehicle, the outer edge of the upper support cover may include a portion overlapping the upper front cover. At least a part of this portion may be located higher than and separated from the outer surface of the upper front cover. That is, a gap may be created as determined along the top-bottom direction of the vehicle between at least a part of the portion of the outer edge of the upper support cover overlapping the upper front cover as viewed from the top of the vehicle and the outer surface of the upper front cover. This condition may be implemented by, for example, attaching the upper support cover to protrusions from the outer surface of the upper front cover.

The outer surface of the upper support cover may include a recess extending in the front-rear direction of the vehicle, for example. This may allow travelling winds hitting the upper support cover to flow rearwardly with respect to the vehicle along the inner surface of the recess. That is, the streamlining effect may be provided to the upper support cover. This may reduce air resistance during travel of the vehicle.

The recess may take the form of a groove opening in the outer surface of the upper support cover and may extend in the front-rear direction of the vehicle, for example.

Only one recess may be provided, for example, or two recesses may be provided. The two recesses may be separated from each other as determined along the left-right direction of the vehicle, for example. The two recesses may have the same shape and size, for example. The two recesses may be shaped to be mirror images of each other with respect to the center line passing through the center of the vehicle as determined along the left-right direction of the vehicle as viewed from the front of the vehicle, for example. As viewed from the front of the vehicle, the direction in which the recess(es) extend(s) may be parallel to the center line passing through the center of the vehicle as determined along the left-right direction of the vehicle, or may be angled relative to the center line.

The recess may be formed by deforming the upper support cover itself in shape, for example. In such implementations, the upper support cover may have a bent portion for forming the recess. This may improve the strength of the upper support cover itself. That is, the stiffness of the upper support cover may be improved.

Preferably, the windshield is not limited to a particular shape as long as at least a part of the windshield is located higher than the upper support cover as viewed from the front of the vehicle. Implementations where at least a part of the windshield is located higher than the upper support cover as viewed from the front of the vehicle may include implementations where the rearmost point of the windshield may be located higher than the upper support cover, for example.

The dimension of the windshield as measured in the left-right direction of the vehicle as viewed from the front of the vehicle may be larger than the dimension of the headlight as measured in the left-right direction of the vehicle as viewed from the front of the vehicle, for example. This may make it easier to produce the windshield effect of the windshield. If the dimension of the windshield as measured in the left-right direction of the vehicle as viewed from the front of the vehicle varies along the top-bottom direction of the vehicle, the dimension of the windshield as measured in the left-right direction of the vehicle as viewed from the front of the vehicle may be represented by the maximum dimension of the windshield as measured in the left-right direction of the vehicle as viewed from the front of the vehicle.

The dimension of the windshield as measured in the left-right direction of the vehicle as viewed from the front of the vehicle may be larger than the dimension of the upper support cover as measured in the left-right direction of the vehicle as viewed from the front of the vehicle, for example. This may make it easier to produce the windshield effect of the windshield.

The dimension of the windshield as measured in the left-right direction of the vehicle as viewed from the front of the vehicle need not be larger than the dimension of the upper front cover as measured in the left-right direction of the vehicle as viewed from the front of the vehicle, for example. This may seek to prevent the width of the windshield from increasing excessively.

The dimension of the windshield as measured in the left-right direction of the vehicle as viewed from the front of the vehicle need not be constant along the top-bottom direction of the vehicle. For example, the dimension of the top edge of the windshield as measured in the left-right direction of the vehicle as viewed from the front of the vehicle may be larger than the dimension of the bottom edge of the windshield as measured in the left-right direction of the vehicle. This may make it easier to produce the windshield effect of the windshield. The top edge of the windshield may include the uppermost point of the windshield. The bottom edge of the windshield may include the lowermost point of the windshield.

The dimension of the windshield as measured in the left-right direction of the vehicle as viewed from the top of the vehicle need not be constant along the front-rear direction of the vehicle. For example, as viewed from the top of the vehicle, the dimension of the rear edge of the windshield as measured in the left-right direction of the vehicle may be larger than the dimension of the front edge of the windshield as measured in the left-right direction of the vehicle. This may make it easier to produce the windshield effect of the windshield. If the dimension of the windshield as measured in the left-right direction of the vehicle as viewed from the top of the vehicle varies along the front-rear direction of the vehicle, the dimension of the windshield as measured in the left-right direction of the vehicle as viewed from the front of the vehicle may be represented by the maximum dimension of the windshield as measured in the left-right direction of the vehicle as viewed from the front of the vehicle. The rear edge of the windshield may include the rearmost point of the windshield. The front edge of the windshield may include the forwardmost point of the windshield.

As viewed from the top of the vehicle, the dimension of the rear edge of the windshield as measured in the left-right direction of the vehicle may be larger than the dimension of the upper support cover as measured in the left-right direction of the vehicle. This may make it easier to produce the windshield effect of the windshield.

The forwardmost point of the windshield may be located at the center of the front edge of the windshield as measured in the left-right direction of the vehicle, for example. Implementations where the forwardmost point of the windshield is located at the center of the front edge of the windshield as measured in the left-right direction of the vehicle may include implementations where the forwardmost point of the windshield may be located on the center line passing through the center of the vehicle as measured in the left-right direction of the vehicle as viewed from the top of the vehicle, for example. As viewed from the top of the vehicle, implementations where the forwardmost point of the windshield is located on the center line may include implementations where the front edge of the windshield crosses the center line as viewed from the top of the vehicle, for example.

Implementations where the windshield is attached to the upper support cover may include implementations where the windshield may be fixed to the upper support cover, as well as implementations where the windshield may bemoveably mounted on the upper support cover. The windshield may be moved relative to the upper support cover by using a drive source such as a motor, for example. In implementations where the windshield is movably mounted on the upper support cover, at least a part of the windshield may only be required to be located higher than the upper support cover as viewed from the front of the vehicle when the windshield may be at a specific position within its range of movement.

The windshield need not be attached to the upper support cover only. The windshield may be attached to the upper support cover and attached to another member (e.g. upper front cover).

The windshield may be suitably located higher than the upper support cover. If the windshield is located higher than the upper support cover, the windshield need not be in contact with the upper support cover.

At least a part of the windshield may be suitably located higher than the upper support cover. That is, it is not that the entire windshield need not be located higher than the upper front cover. The portion of the windshield that is located higher than the upper support cover need not be in contact with the upper support cover.

As viewed from the top of the vehicle, the outer edge of the windshield may include a portion overlapping one of the upper front cover and upper support cover. As viewed from the top of the vehicle, the outer edge of the windshield may include a portion overlapping the upper front cover and a portion overlapping the upper support cover.

If the outer edge of the windshield includes a portion overlapping the upper front cover as viewed from the top of the vehicle, at least a part of that portion may be located higher than and separated from the outer surface of the upper front cover. That is, a gap may be created as determined along the top-bottom direction of the vehicle between at least a part of the portion of the outer edge of the windshield overlapping the upper front cover as viewed from the top of the vehicle and the outer surface of the upper front cover.

If the outer edge of the windshield includes a portion overlapping the upper support cover as viewed from the top of the vehicle, at least a part of that portion may be located higher than and may be separated from the outer surface of the upper support cover. That is, a gap may be created as determined along the top-bottom direction of the vehicle between at least a part of the portion of the outer edge of the windshield overlapping the upper support cover as viewed from the top of the vehicle and the outer surface of the upper support cover.

The outer surface of the windshield may include a recess extending in the front-rear direction of the vehicle, for example. This may allow travelling winds hitting the windshield to flow rearwardly with respect to the vehicle along the inner surface of the recess. That is, the streamlining effect may be provided to the windshield. This may reduce air resistance during travel of the vehicle.

The recess may take the form of a groove opening in the outer surface of the windshield and may extend in the front-rear direction of the vehicle, for example.

Only one recess may be provided, for example, or two recesses may be provided. The two recesses may be separated from each other as determined along the left-right direction of the vehicle, for example. The two recesses may have the same shape and size, for example. The two recesses may be shaped to be mirror images of each other with respect to the center line passing through the center of the vehicle as determined along the left-right direction of the vehicle as viewed from the front of the vehicle, for example. As viewed from the front of the vehicle, the direction in which the recess(es) extend(s) may be parallel to the center line passing through the center of the vehicle as determined along the left-right direction of the vehicle, or may be angled relative to the center line.

The recess may be formed by deforming the windshield itself in shape, for example. In such implementations, the windshield may have a bent portion for forming the recess. This may improve the strength of the windshield itself. That is, the stiffness of the windshield may be improved.

The rearmost point of the windshield may be located rearward of the rearmost point of the upper support cover as viewed from the top of the vehicle. This makes it possible to position the rearmost point of the windshield closer to the rider. This makes it easier to produce the windshield effect of the windshield.

The rearmost point of the windshield may be located forward of the rearmost point of the upper support cover as viewed from the top of the vehicle. This makes it possible to reduce the dimension of the windshield as measured in the front-rear direction of the vehicle. That is, the size of the windshield may be reduced.

A gap may be created as determined along the top-bottom direction of the vehicle between the portion of front edge of the windshield overlapping the upper support cover as viewed from the top of the vehicle and the outer surface of the upper support cover. In such implementations, travelling winds flow between the windshield and upper support cover. Thus, negative pressure is unlikely to be generated in areas to the rear of the windshield.

### BRIEF DESCRIPTION OF DRAWINGS

An embodiment of the present invention will now be described by way of example only, with reference to the accompanying drawings, which are:
- FIG. 1: a left side view of a motorcycle according to an embodiment of the present invention;
- FIG. 2: a front view of the headlight and nearby components of the motorcycle shown in FIG. 1;
- FIG. 3: a side view of the headlight and nearby components of the motorcycle shown in FIG. 1;
- FIG. 4: a top view of the headlight and nearby components of the motorcycle shown in FIG. 1;
- FIG. 5: a front view of the headlight and nearby components of the motorcycle shown in FIG. 1, with the upper support cover and windshield removed;
- FIG. 6: a side view of the headlight and nearby components of the motorcycle shown in FIG. 1, with the upper support cover and windshield removed;
- FIG. 7: a top view of the headlight and nearby components of the motorcycle shown in FIG. 1, with the upper support cover and windshield removed;
- FIG. 8: a front view of the headlight and nearby components of the motorcycle shown in FIG. 1, with the upper support cover attached to the upper front cover and with the windshield not yet attached to the upper support cover;
- FIG. 9: a side view of the headlight and nearby components of the motorcycle shown in FIG. 1, with the upper support cover attached to the upper front cover and with the windshield not yet attached to the upper support cover;
- FIG. 10: a top view of the headlight and nearby components of the motorcycle shown in FIG. 1, with the upper support cover attached to the upper front cover and with the windshield not yet attached to the upper support cover;
- FIG. 11: a cross-sectional view taken along line XI-XI in FIG. 2;
- FIG. 12: a top view of the upper support cover;
- FIG. 13: a left side view of the upper support cover;
- FIG. 14: a top view of the windshield; and
- FIG. 15: a left side view of the windshield.

### DETAILED DESCRIPTION OF THE EMBODIMENTS

A straddled vehicle according to an embodiment of the present invention will now be described by way of example only, and with reference to the accompanying drawings. The present embodiment will be described where a motorcycle will be discussed as an example of the straddled vehicle. The same or corresponding parts in the drawings are labeled with the same numerals or characters and their description will not be repeated.

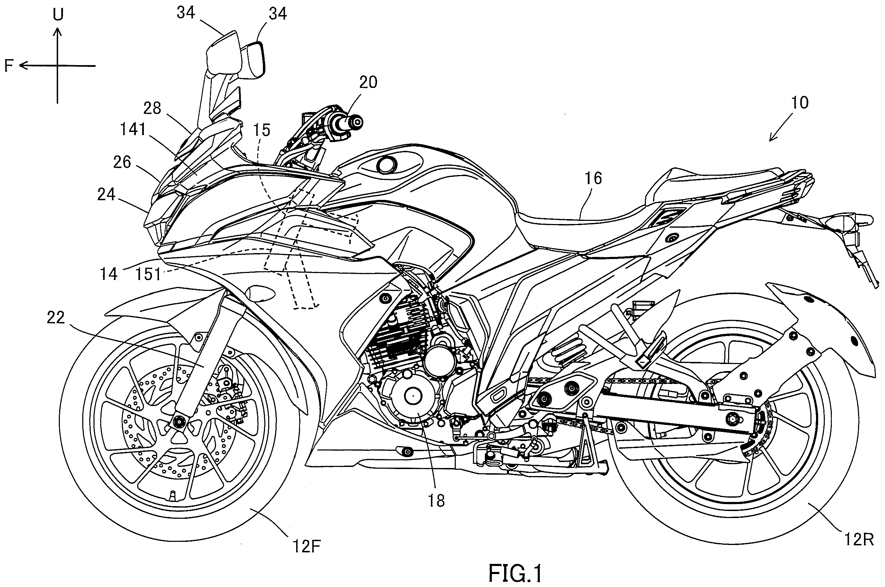

FIG. 1 is a left side view of a motorcycle 10. In the following description, "front/forward", "rear(ward)", "left" and "right" mean directions as perceived by a rider sitting on a seat 16 of the motorcycle 10. In FIG. 1, arrow "F" indicates the forward direction with respect to the motorcycle 10, and arrow "U" indicates the upward direction with respect to the motorcycle 10.

As shown in FIG. 1, the motorcycle 10 includes a front wheel 12F, a rear wheel 12R, a vehicle-body cover 14, a vehicle-body frame 15, the seat 16, an engine 18, handlebars 20, a front fork 22, and a headlight 24.

The front fork 22 supports the front wheel 12F such that the front wheel is rotatable. Operating the handlebars 20 causes the direction of advance of the front wheel 12F to change.

The vehicle-body cover 14 covers the vehicle-body frame 15. The engine 18 is attached to the vehicle-body frame 15.

The rear wheel 12R is located rearward of the engine 18. As drive power from the engine 18 is transmitted to the rear wheel 12R, the rear wheel 12R rotates.

The seat 16 is located higher than and rearward of the engine 18.

The headlight 24 is supported to the vehicle-body frame 15 (e.g. headlight pipe 151) with a stay, for example, provided therebetween. The headlight 24 is located forward of the handlebars 20.

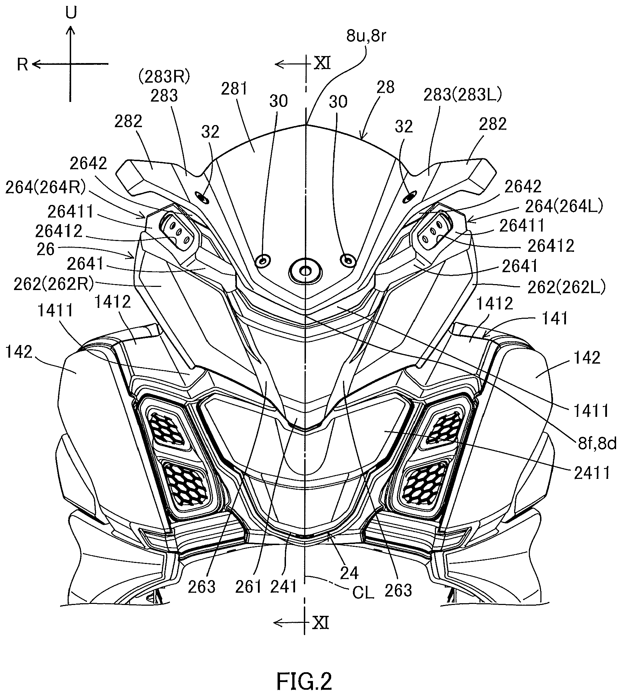

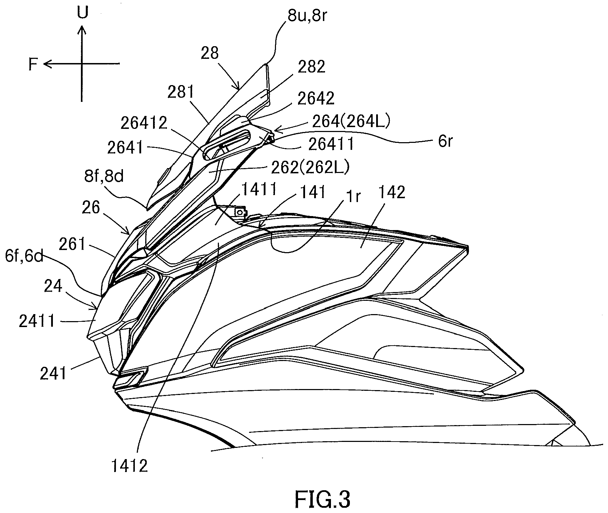

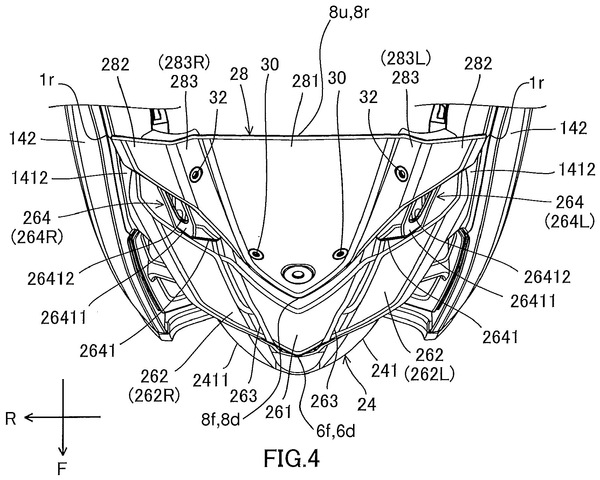

The motorcycle 10 will be described in more detail with reference to FIGS. 2, 3 and 4. FIG. 2 is a front view of the headlight 24 and nearby components of the motorcycle 10. FIG. 3 is a side view of the headlight 24 and nearby components of the motorcycle 10. FIG. 4 is a top view of the headlight 24 and nearby components of the motorcycle 10.

The motorcycle 10 includes an upper front cover 141, an upper support cover 26, and a windshield 28. These components will be described below.

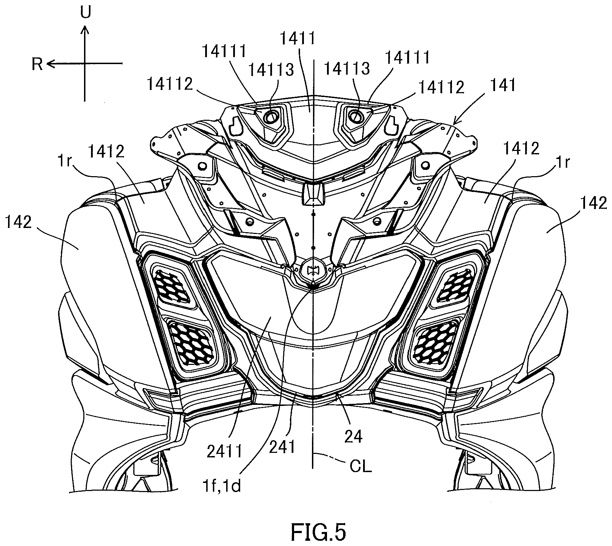

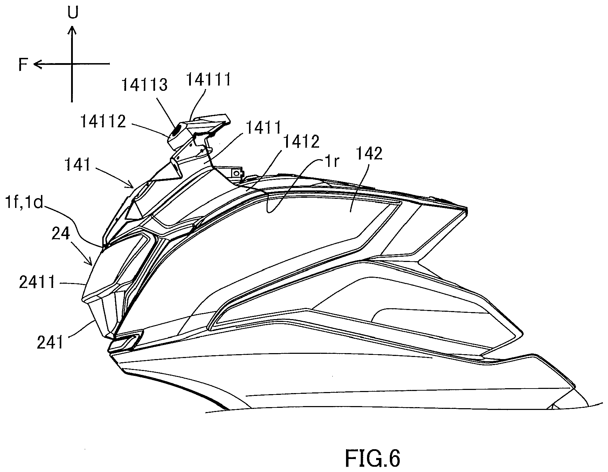

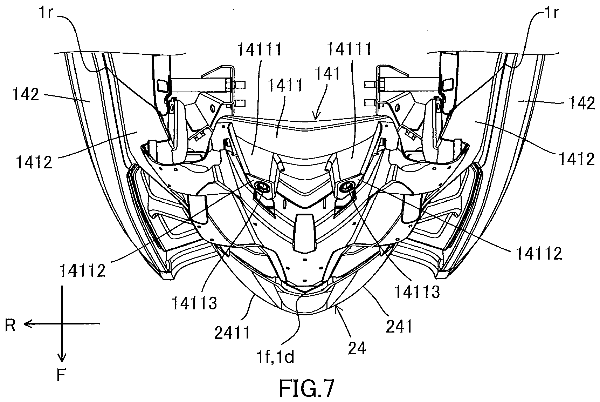

The upper front cover 141 will be described with reference to FIGS. 5, 6 and 7. FIG. 5 is a front view of the headlight 24 and nearby components of the motorcycle 10, with the upper support cover 26 and windshield 28 removed. FIG. 6 is a side view of the headlight 24 and nearby components of the motorcycle 10, with the upper support cover 26 and windshield 28 removed. FIG. 7 is a top view of the headlight 24 and nearby components of the motorcycle 10, with the upper support cover 26 and windshield 28 removed.

As shown in FIG. 5, the headlight 24 is located on a center line CL passing through the center of the vehicle as determined along the left-right direction of the vehicle as viewed from the front of the vehicle. That is, the headlight 24 is located at the center of the vehicle as determined along the left-right direction thereof.

As shown in FIG. 5, the headlight 24 includes a lens 241. The lens 241 is symmetrical in shape with respect to the center line CL as viewed from the front of the vehicle.

As shown in FIG. 5, the lens 241 includes a translucent surface 2411. The translucent surface 2411 passes light emitted by the light source of the headlight 24. As viewed from the front of the vehicle, the translucent surface 2411 is symmetrical in shape with respect to the central axis CL.

As shown in FIG. 5, the translucent surface 2411 extends in the left-right direction of the vehicle as viewed from the front of the vehicle. As viewed from the front of the vehicle, the translucent surface 2411 extends in the top-bottom direction of the vehicle. As viewed from the front of the vehicle, the dimension of the translucent surface 2411 as measured in the left-right direction of the vehicle is larger than the dimension of the translucent surface 2411 as measured in the top-bottom direction of the vehicle.

As shown in FIG. 6, the central portion of the translucent surface 2411 as determined along the top-bottom direction of the vehicle protrudes forward with respect to the vehicle. As shown in FIG. 7, the central portion of the translucent surface 2411 as determined along the left-right direction of the vehicle protrudes forward with respect to the vehicle.

The upper front cover 141 is part of the vehicle-body cover 14. The upper front cover 141 is attached to the vehicle-body frame 15 (e.g. head pipe 151) with a stay, for example, provided therebetween.

As shown in FIG. 5, the upper front cover 141 is located between a pair of front side covers 142 located to the left and right as determined along the left-right direction of the vehicle. The left and right front side covers 142 are part of the vehicle-body frame 14.

As shown in FIG. 5, the upper front cover 141 is located on the center line CL. That is, the upper front cover 141 is located at the center of the vehicle as determined along the left-right direction thereof. The upper front cover 141 is symmetrical in shape with respect to the center line CL as viewed from the front of the vehicle.

As shown in FIG. 5, the upper front cover 141 extends in the left-right direction of the vehicle. As shown in FIG. 7, the upper front cover 141 extends in the front-rear direction of the vehicle. The dimension of the upper front cover 141 as measured in the left-right direction of the vehicle is larger than the dimension of the upper front cover 141 as measured in the front-rear direction of the vehicle. As shown in FIG. 5, the dimension of the upper front cover 141 as measured in the left-right direction of the vehicle is larger than the dimension of the translucent surface 2411 as measured in the left-right direction of the vehicle.

As shown in FIG. 7, the upper front cover 141 covers a rear portion of the headlight 24 from above. As such, the forwardmost point 1f of the upper front cover 141 is located rearward of the forwardmost point of the headlight 24 (i.e. the forwardmost point of the translucent surface 2411). To sum up, at least a part of the upper front cover 141 is located higher than the headlight 24.

As shown in FIG. 5, the central portion, as determined along the left-right direction of the vehicle, of the front edge of the upper front cover 141 extends along the upper edge of the translucent surface 2411 as viewed from the front of the vehicle. That is, the central portion, as determined along the left-right direction of the vehicle, of the front edge of the upper front cover 141 is located higher than the translucent surface 2411.

As shown in FIGS. 5 and 7, the forwardmost point 1f of the upper front cover 141 is located lower than the rearmost points 1r of the upper front cover 141. That is, the rearmost points 1r of the upper front cover 141 are located higher than the forwardmost point 1f of the upper front cover 141.

As shown in FIG. 5, the upper front cover 141 includes a central portion 1411 and a pair of side portions 1412 located to the left and right. These components will be described below.

As shown in FIG. 5 and 7, the central portion 1411 is a portion of the upper front cover 141 that is located at the center thereof as determined along the left-right direction of the vehicle. The central portion 1411 is located between the left and right side portions 1412 as determined along the left-right direction of the vehicle.

As shown in FIG. 5, the central portion 1411 protrudes upward from the outer surfaces of the left and right side portions 1412. As shown in FIG. 7, the forwardmost point 1f of the central portion 1411 is located forward of the forwardmost points of the left and right side portions 1412.

As shown in FIG. 5, the central portion 1411 includes a pair of attachment portions 14111 located to the left and right. The left and right attachment portions 14111 protrude from the outer surface of the central portion 1411. As viewed from the front of the vehicle, the left and right attachment portions 14111 are positioned to be mirror images of each other with respect to the center line CL. That is, the left and right attachment portions 14111 are located at the same position as determined along the top-bottom direction of the vehicle. The left and right attachment portions 14111 are formed integrally with the central portion 1411.

As shown in FIGS. 5 and 7, each of the left and right attachment portions 14111 includes an attachment surface 14112. The windshield 28 is to be in contact with the attachment surfaces 14112. An attachment hole 14113 is formed in each attachment surface 14112.

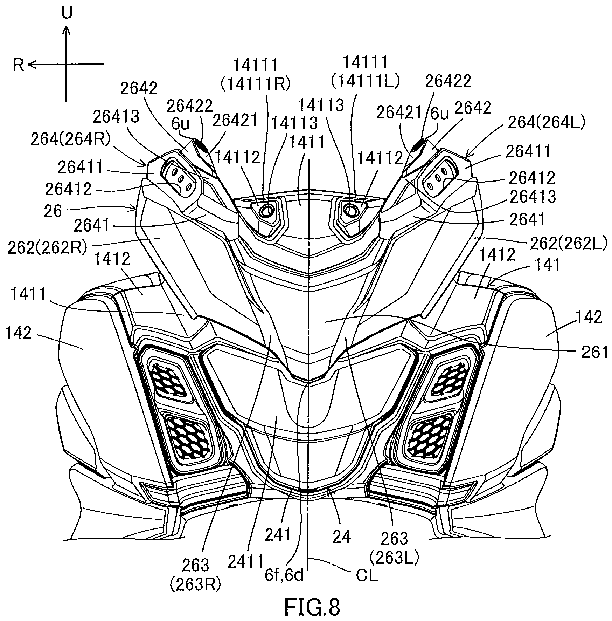

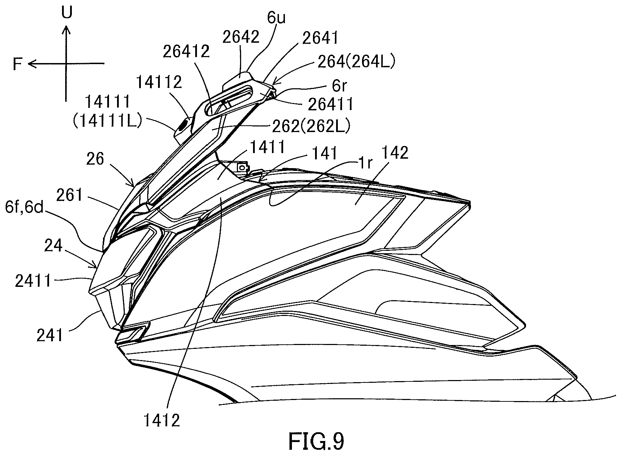

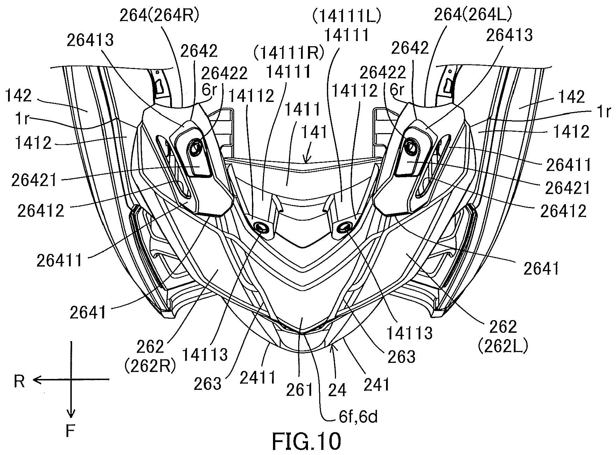

As shown in FIG. 8, 9 and 10, the upper support cover 26 is attached to the upper front cover 141. FIG. 8 is a front view with the upper support cover 26 attached to the upper front cover 141. FIG. 9 is a side view with the upper support cover 26 attached to the upper front cover 141. FIG. 10 is a top view with the upper support cover 26 attached to the upper front cover 141.

As shown in FIG. 10, as viewed from the top of the vehicle, a part of the upper front cover 141 is covered with the upper support cover 26. That is, at least a part of the upper support cover 26 is located higher than the upper front cover 141.

As shown in FIG. 8, the upper support cover 26 is located on the center line CL as viewed from the front of the vehicle. That is, the upper support cover 26 is located at the center of the vehicle as determined along the left-right direction thereof. The upper support cover 26 is symmetrical in shape with respect to the center line CL.

As shown in FIGS. 8 and 10, the dimension of the upper support cover 26 as measured in the left-right direction of the vehicle is smaller than the dimension of the upper front cover 141 as measured in the left-right direction of the vehicle. As shown in FIG. 8, the dimension of the upper support cover 26 as measured in the left-right direction of the vehicle is larger than the dimension of the central portion 1411 of the upper front cover 141 as measured in the left-right direction of the vehicle.

As shown in FIGS. 8 and 9, the rearmost points 6r of the upper support cover 26 are located higher than the forwardmost point 6f of the upper support cover 26. The rearmost points 6r of the upper support cover 26 are located higher than the central portion 1411 of the upper front cover 141.

As shown in FIG. 10, the rearmost points 6r of the upper support cover 26 are located rearward of the rearmost points 1r of the upper front cover 141.

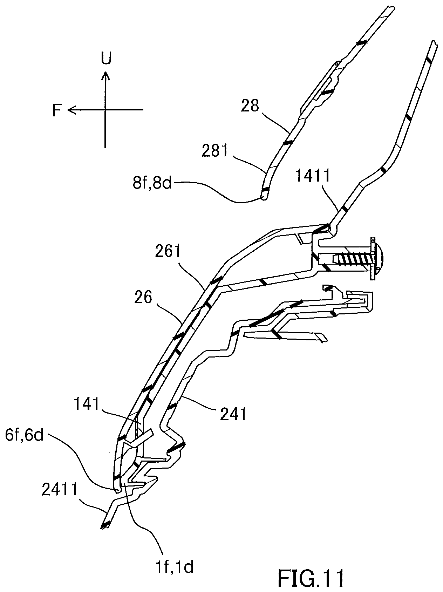

As shown in FIG. 11, the forwardmost point 6f of the upper support cover 26 is located forward of the forwardmost point 1f of the upper front cover 141. FIG. 11 is a cross-sectional view taken along line XI-XI in FIG. 2.

As shown in FIG. 9, the lowermost point 6d of the upper support cover 26 is located forward of the uppermost point 6u of the upper support cover 26.

As shown in FIG. 8, the lowermost point 6d of the upper support cover 26 is located at the center of the vehicle as determined along the left-right direction thereof. The area of the lowermost point 6d of the upper support cover 26 includes the forwardmost point 6f of the upper support cover 26.

As shown in FIG. 8, the lowermost point 6d of the upper support cover 26 is located higher than the central portion of the translucent surface 2411 as determined along the left-right direction of the vehicle. That is, a part of the lower edge of the upper support cover 26 is located higher than the upper edge of the translucent surface 2411.

As shown in FIG. 11, the lowermost point 6d of the upper support cover 26 is generally located at the same position as the lowermost point 1d of the upper front cover 141 as determined along the top-bottom direction of the vehicle. The lowermost point 6d of the upper support cover 26 is located forward of the lowermost point 1d of the upper front cover 141. Thus, as shown in FIGS. 2 and 8, the area of the lowermost point of the upper front cover 141 is covered with the area of the lowermost point 6d of the upper support cover 26 as viewed from the front of the vehicle.

As shown in FIG. 8, the uppermost points 6u of the upper support cover 26 are located higher than the central portion 1411 of the upper front cover 141.

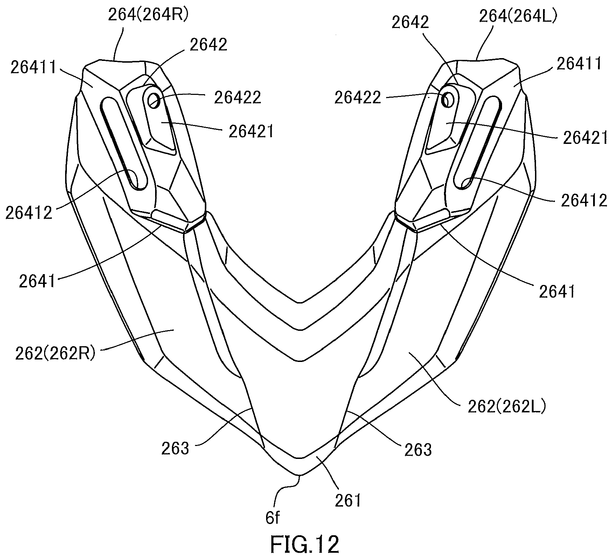

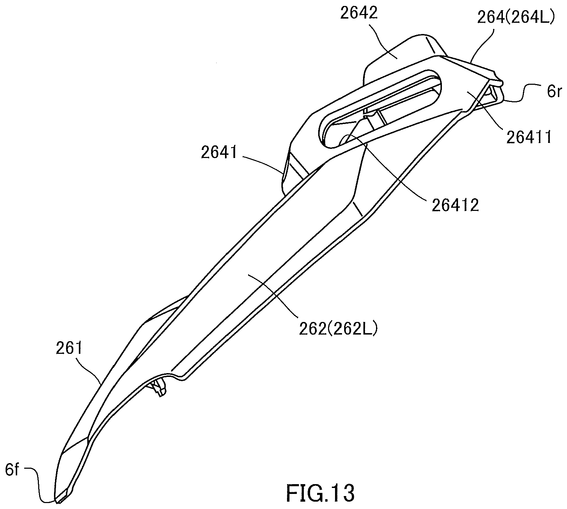

The upper support cover 26 will be described in more detail with reference to FIGS. 12 and 13. FIG. 12 is a top view of the upper support cover 26. FIG. 13 is a left side view of the upper support cover 26.

As shown in FIG. 12, the upper support cover 26 includes a central portion 261 and a pair of side portions 262 located to the left and right. The central portion 261 includes the forwardmost point of the upper support cover 26. The central portion 261 is located between the left and right side portions 262. A groove 263 is provided between each of the left and right side portions 262 and the central portion 261. That is, the upper support cover 26 has a pair of grooves 263 located to the left and right.

The upper support cover 26 further includes a pair of attachment portions 264 located to the left and right. The left and right attachment portions 264 are located at the rear of the upper support cover 26. Each of the left and right attachment portions 264 includes one of the rearmost points of the upper support cover 26.

Each of the left and right attachment portions 264 includes an attachment sub-portion 2641 and an attachment sub-portion 2642. The left one of the attachment portions 264, i.e. left attachment portion 264L, is connected to the left one of the side portions 262, i.e. left side portion 262L. The right one of the attachment portions 264, i.e. right attachment portion 264R, is connected to the right one of the side portions 262, i.e. right side portion 262R. The attachment sub-portion 2641 of the left attachment portion 264L protrudes from the outer surface of the left side portion 262L. The attachment sub-portion 2641 of the right attachment portion 264R protrudes from the outer surface of the right side portion 262R. The attachment sub-portion 2642 of the left attachment portion 264L protrudes from the outer surface of the attachment sub-portion 2641 of the left attachment portion 264L. The attachment sub-portion 2642 of the right attachment portion 264R protrudes from the outer surface of the attachment sub-portion 2641 of the right attachment portion 264R.

The upper support cover 26 attached to the upper front cover 141 will be further described with reference to FIGS. 8, 9 and 10.

The upper support cover 26 may be attached to the upper front cover 141 by, for example, providing a locking piece on one of the upper support cover 26 and upper front cover 141 and lock it into a locking hole formed in the other one of these covers, or screwing one of the upper support cover 26 and upper front cover 141 into the other one of these covers.

As shown in FIG. 10, the central portion 261 extends in the front-rear direction of the vehicle as viewed from the top of the vehicle. The dimension of the central portion 261 as measured in the left-right direction of the vehicle varies along the front-rear direction of the vehicle. That is, the dimension of the central portion 261 as measured in the left-right direction of the vehicle is not constant along the front-rear direction of the vehicle. The dimension of the rear edge of the central portion 261 as measured in the left-right direction of the vehicle is larger than the dimension of the front edge of the central portion 261 as measured in the left-right direction of the vehicle. The center, as determined along the left-right direction of the vehicle, of the rear edge of the central portion 261 is located forward, with respect to the vehicle, of the rear edge's ends as determined along the left-right direction of the vehicle (i.e. left and right ends).

As shown in FIG. 8, the central portion 261 extends in the top-bottom direction of the vehicle as viewed from the front of the vehicle. The dimension of the central portion 261 as measured in the left-right direction of the vehicle varies along the top-bottom direction of the vehicle. That is, the dimension of the central portion 261 as measured in the left-right direction of the vehicle is not constant along the top-bottom direction of the vehicle as viewed from the front of the vehicle. The lowermost point of the central portion 261 is located lower than the uppermost point of the central portion 261.

As shown in FIG. 9, the forwardmost point of the central portion 261 is located lower than the rearmost point of the central portion 261.

As shown in FIGS. 8 and 10, the central portion 261 is located between the left and right side portions 262 as determined along the left-right direction of the vehicle. That is, the left and right side portions 262 are separated from each other as determined along the left-right direction of the vehicle.

As shown in FIG. 8, each of the left and right grooves 263 extends in a direction angled relative to the center line CL. The left one of the grooves 263, i.e. groove 263L, has a front end that is located inward (right) of the rearmost point of the groove 263L as determined along the left-right direction of the vehicle. The right one of the grooves 263, i.e. groove 263R, has a front end that is located inward (left) of the rearmost point of the groove 263R as determined along the left-right direction of the vehicle.

As shown in FIG. 10, each of the left and right side portions 262 extends in the front-rear direction of the vehicle as viewed from the top of the vehicle. The left and right side portions 262 are located at the same position as determined along the front-rear direction of the vehicle.

As shown in FIG. 10, the forwardmost point of each of the left and right side portions 262 is located rearward of the forwardmost point of the central portion 261 as viewed from the top of the vehicle. The rearmost point of each of the left and right side portions 262 is located rearward of the rearmost point of the central portion 261 as viewed from the top of the vehicle.

As shown in FIG. 8, each of the left and right side portions 262 extends in the top-bottom direction of the vehicle as viewed from the front of the vehicle. The forwardmost point of each of the left and right side portions 262 is located higher than the forwardmost point of the central portion 261 as viewed from the front of the vehicle. The rearmost point of each of the left and right side portions 262 is located higher than the rearmost point of the central portion 261 as viewed from the front of the vehicle.

As shown in FIGS. 8 and 10, the left and right attachment portions 264 are separated from each other as determined along the left-right direction of the vehicle. As shown in FIG. 8, the left and right attachment portions 264 are positioned to be mirror images of each other with respect to the center line CL as viewed from the front of the vehicle. That is, the left and right attachment portions 264 are located at the same position as determined along the top-bottom direction of the vehicle.

As shown in FIG. 10, the left and right attachment portions 264 are located at the same position as determined along the front-rear direction of the vehicle. Each of the left and right attachment portions 264 includes one of the rearmost points 6r of the upper support cover 26.

As shown in FIGS. 8 and 10, a part of the central portion 1411 of the upper front cover 141 is exposed between the left and right attachment portions 264. The left and right attachment portions 14111 are provided on the part of the central portion 1411 exposed between the left and right attachment portions 264. That is, the left and right attachment portions 14111 are provided on portions of the central portion 1411 of the upper front cover 141 that are not covered with the upper support cover 26.

As shown in FIG. 8, the left and right attachment portions 264 are located at a different position from that of the left and right attachment portions 14111 as determined along the top-bottom direction of the vehicle. At least a part of each of the left and right attachment portions 264 is located higher than the left and right attachment portions 14111.

As shown in FIG. 10, the left and right attachment portions 264 are located at a different position from that of the left and right attachment portions 14111 as determined along the front-rear direction of the vehicle. At least a part of each of the left and right attachment portions 264 is located rearward of the left and right attachment portions 14111.

As shown in FIGS. 8 and 10, each of the left and right attachment portions 264 is located at a different position from that of the corresponding one of the left and right attachment portions 14111 as determined along the left-right direction of the vehicle. The left and right attachment portions 14111 are located between the left and right attachment portions 264 as determined along the left-right direction of the vehicle.

As shown in FIGS. 8 and 10, the left one of the attachment portions 264, i.e. left attachment portion 264L, is located to the left of the left one of the attachment portions 14111, i.e. left attachment portion 14111L. The right one of the attachment portions 264, i.e. right attachment portion 264R, is located to the right of the right one of the attachment portions 14111, i.e. right attachment portion 14111R.

As shown in FIGS. 8 and 10, the attachment sub-portion 2641 of each of the left and right attachment portions 264 includes an attachment surface 26411. The attachment surface 26411 has an attachment hole 26412. The attachment surface 26411 expands in directions different from those directions in which a support surface 26413 expands, which is a protrusion from the attachment sub-portion 2642. The attachment surface 26411 expands in directions different from those directions in which the attachment surface 14112 of the attachment portion 14111 expands.

As shown in FIG. 10, at least a part of each attachment surface 26411 is located outward of the corresponding support surface 26413 as determined along the left-right direction of the vehicle. That is, at least a part of each attachment surface 26411 is located outward of the corresponding attachment sub-portion 2642 as determined along the left-right direction of the vehicle.

Although not shown, a side mirror 34 is attached to each of the attachment sub-portions 2641 of the left and right attachment portions 264. More specifically, each side mirror 34 is in contact with the attachment surface 26411 of the corresponding attachment sub-portion 2641. Then, a part of the side mirror 34 is inserted into the attachment hole 26412 formed in the attachment surface 26411. The side mirror 34 is attached to the attachment portion 2641 as portions of the side mirror 34 located inside the attachment hole 26412 after insertion are screwed into another member inside the attachment sub-portion 2641.

As shown in FIGS. 8 and 10, the attachment sub-portion 2642 of each of the left and right attachment portions 264 includes an attachment surface 26421. The windshield 28 is to be in content with the attachment surfaces 26421. Each attachment surface 26421 expands in directions different from those directions in which the attachment surface 26411 provided on the corresponding attachment sub-portion 2641 expands. Each attachment surface 26421 expands in directions different from those directions in which the attachment surface 14112 provided on the corresponding attachment portion 14111 expands. An attachment hole 26422 is formed in each attachment surface 26421.

As shown in FIGS. 2, 3 and 4, the windshield 28 is attached to the upper support cover 26. The windshield 28 will be described with reference to FIGS. 2, 3 and 4.

As shown in FIG. 4, a part of the upper support cover 26 is covered with the windshield 28 as viewed from the top of the vehicle. That is, at least a part of the windshield 28 is located higher than the upper support cover 26.

As shown in FIG. 2, the windshield 28 is located on the center line CL as viewed from the front of the vehicle. That is, the windshield 28 is located at the center of the vehicle as determined along the left-right direction thereof. The windshield 28 is symmetrical in shape with respect to the center line CL.

As shown in FIGS. 2 and 4, the dimension of the windshield 28 as measured in the left-right direction of the vehicle is (slightly) smaller than the dimension of the upper front cover 141 as measured in the left-right direction of the vehicle. The dimension of the windshield 28 as measured in the left-right direction of the vehicle is larger than the dimension of the upper support cover 26 as measured in the left-right direction of the vehicle. As shown in FIG. 2, the dimension of the windshield 28 as measured in the left-right direction of the vehicle is larger than the dimension of the central portion 1411 of the upper front cover 141 as measured in the left-right direction of the vehicle.

As shown in FIGS. 2 and 3, the rearmost point 8r of the windshield 28 is located higher than the forwardmost point 8f of the windshield 28. As shown in FIG. 3, the rearmost point 8r of the windshield 28 is located rearward of the attachment sub-portions 2642 of the left and right attachment portions 264. The rearmost point 8r of the windshield 28 is located rearward of the attachment holes 26412 formed in the attachment sub-portions 2641 of the left and right attachment portions 264. The rearmost point 8r of the windshield 28 is located higher than the attachment sub-portions 2642 of the left and right attachment portions 264.

As shown in FIGS. 3 and 4, the forwardmost point 8f of the windshield 28 is located rearward of the forwardmost point 6f of the upper support cover 26. The forwardmost point 8f of the windshield 28 is located at the center of the windshield 28 as determined along the left-right direction of the vehicle. As shown in FIG. 11, the forwardmost point 8f of the windshield 28 is located rearward of the forwardmost point 1f of the upper front cover 141.

As shown in FIG. 3, the lowermost point 8d of the windshield 28 is located forward of the uppermost point 8u of the windshield 28. That is, the uppermost point 8u of the windshield 28 is located rearward of the lowermost point 8d of the windshield 28. The lowermost point 8d of the windshield 28 is located at the center of the windshield as determined along the left-right direction of the vehicle.

As shown in FIG. 3, the lowermost point 8d of the windshield 28 is located higher than the lowermost point 6d of the upper support cover 26. The lowermost point 8d of the windshield 28 is located rearward of the lowermost point 6d of the upper support cover 26.

As shown in FIG. 11, the lowermost point 8d of the windshield 28 is located higher than the central portion 261 of the upper support cover 26. Thus, as shown in FIG. 2, a part of the upper front cover 141 is exposed below the lowermost point 8d of the windshield 28 as viewed from the front of the vehicle.

As shown in FIG. 2, the uppermost point 8u of the windshield 28 is located on the center line CL. As shown in FIG. 3, the uppermost point 8u of the windshield 28 is located at the rearmost point 8r of the windshield 28. That is, the area of the rearmost point 8r of the windshield 28 includes the uppermost point 8u of the windshield 28. It should be noted that the uppermost point of the windshield 28 may not be located at the rearmost point of the windshield 28.

As shown in FIGS. 3 and 4, the rearmost point 8r of the windshield 28 is located forward of the rearmost points 1r of the upper front cover 141. The rearmost point 8r of the windshield 28 is located forward of the rearmost points 6r of the upper support cover 26.

As shown in FIG. 4, as viewed from the top of the vehicle, some portions of the outer edge of the windshield 28 overlap the outer surface of the upper support cover 26. As viewed from the top of the vehicle, some portions of the outer edge of the windshield 28 overlap the outer surface of the upper front cover 141.

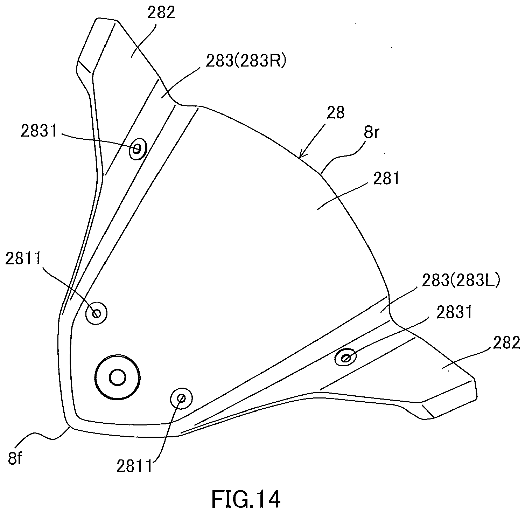

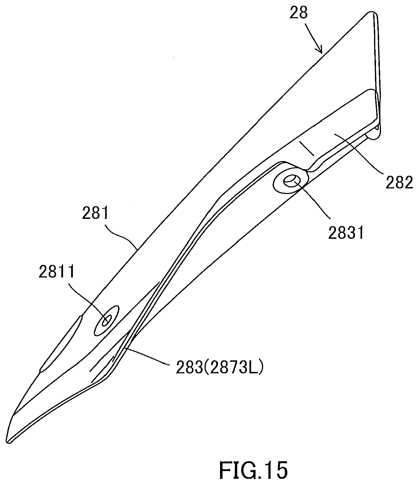

The windshield 28 will be described in more detail with reference to FIGS. 14 and 15. FIG. 14 is a top view of the windshield 28. FIG. 15 is a left side view of the windshield 28.

The windshield 28 includes a central portion 281 and a pair of side portions 282 located to the left and right. The central portion 281 includes the forwardmost point 8f of the windshield 28. The central portion 281 is located between the left and right side portions 282. A groove 283 is provided between each of the left and right side portions 282 and the central portion 281. That is, the windshield 28 has a pair of grooves 283 located to the left and right.

The windshield 28 attached to the upper support cover 26 will be further described with reference to FIGS. 2, 3 and 4.

The windshield 28 may be attached to the upper support cover 26 by screwing a front portion of the windshield 28 on the pair of attachment portions 14111 and screwing a rear portion of the windshield 28 on the pair of attachment sub-portions 2642. Screws 30 for screwing the front portion of the windshield 28 are inserted through attachment holes 2811 (see FIGS. 14 and 15) formed in the central portion 281 and through the attachment holes 14113 formed in the attachment portions 14111. Screws 32 for screwing the rear portion of the windshield 28 are inserted through attachment holes 2831 (see FIGS. 14 and 15) formed in the grooves 283 and through the attachment holes 26422 formed in the attachment sub-portions 2642.

As shown in FIG. 4, the central portion 281 extends in the front-rear direction of the vehicle as viewed from the top of the vehicle. The dimension of the central portion 281 as measured in the left-right direction of the vehicle varies along the front-rear direction of the vehicle. That is, the dimension of the central portion 281 as measured in the left-right direction of the vehicle is not constant along the front-rear direction of the vehicle. The dimension of the rear edge of the central portion 281 as measured in the left-right direction of the vehicle is larger than the dimension of the front edge of the central portion 281 as measured in the left-right direction of the vehicle.

As shown in FIG. 2, the central portion 281 extends in the top-bottom direction of the vehicle as viewed from the front of the vehicle. The dimension of the central portion 281 as measured in the left-right direction of the vehicle varies in the top-bottom direction of the vehicle. That is, the dimension of the central portion 281 as measured in the left-right direction of the vehicle is not constant along the top-bottom direction of the vehicle. The dimension of the upper edge of the central portion 281 as measured in the left-right direction of the vehicle is larger than the dimension of the lower edge of the central portion 281 as measured in the left-right direction of the vehicle. The center of the upper edge of the central portion 281 as determined along the left-right direction of the vehicle is located higher than the ends thereof as determined along the left-right direction of the vehicle (i.e. left and right ends).

As shown in FIG. 2, the central portion 281 is symmetrical in shape with respect to the center line CL as viewed from the front of the vehicle. The area of the forwardmost point of the central portion 281 includes the forwardmost point 8f of the windshield 28. The forwardmost point of the central portion 281 is located lower than the rearmost point of the central portion 281.

As shown in FIGS. 2 and 4, the central portion 281 is located between the left and right side portions 282 as determined along the left-right direction of the vehicle. That is, the left and right side portions 282 are separated from each other as determined along the left-right direction of the vehicle.

As shown in FIG. 2, the left and right grooves 283 are positioned to be mirror images of each other with respect to the center line CL as viewed from the front of the vehicle. Each of the left and right grooves 283 extends in a direction angled relative to the center line CL. The left one of the grooves 283, i.e. groove 283L, has a front end that is located inward (right) of the rear end of the groove 283L as determined along the left-right direction of the vehicle. The right one of the grooves 283, i.e. groove 283R, has a front end located inward (left) of the rear end of the groove 283R as determined along the left-right direction of the vehicle.

As shown in FIG. 2, the left and right side portions 282 are shaped to be mirror images of each other with respect to the center line CL as viewed from the front of the vehicle.

As shown in FIG. 4, each of the left and right side portions 282 extends in the front-rear direction of the vehicle as viewed from the top of the vehicle. The dimension of each of the left and right side portions 282 as measured in the left-right direction of the vehicle as viewed from the top of the vehicle varies along the front-rear direction of the vehicle. That is, the dimension of each of the left and right side portions 282 as measured in the left-right direction of the vehicle as viewed from the top view of the vehicle is not constant along the front-rear direction of the vehicle.

As shown in FIG. 4, the forwardmost points of the left and right side portions 282 are located rearward of the forwardmost point of the central portion 281 as viewed from the top of the vehicle. The rearmost points of the left and right side portions 282 may be located forward of the rearmost point of the central portion 281 as viewed from the top of the vehicle. It should be noted that the rearmost points of the left and right side portions 282 may be located rearward of the rearmost point of the central portion 281 as viewed from the top of the vehicle.

As shown in FIG. 2, each of the left and right side portions 282 extends in the top-bottom direction of the vehicle as viewed from the front of the vehicle. The dimension of each of the left and right side portions 282 as measured in the left-right direction of the vehicle as viewed from the front of the vehicle varies along the top-bottom direction of the vehicle. That is, the dimension of each of the left and right side portions 282 as measured in the left-right direction of the vehicle as viewed from the front of the vehicle is not constant along the top-bottom direction of the vehicle. The dimension of the upper edge of each of the left and right side portions 282 as measured in the left-right direction of the vehicle is larger than the dimension of the lower edge thereof as measured in the left-right direction of the vehicle.

As shown in FIG. 2, the forwardmost points of the left and right side portions 282 are located higher than the forwardmost point of the central portion 281 as viewed from the front of the vehicle. The rearmost points of the left and right side portions 282 are located lower than the rearmost point of the central portion 281 as viewed from the front of the vehicle.

In the motorcycle 10, the windshield 28 is attached to the upper front cover 141 with the upper support cover 26 provided therebetween. This reduces restriction of the shape of the windshield 28 by the shape of the upper front cover 141. This ensures freedom in designing the shape of the windshield 28.

In the motorcycle 10, the rearmost point of the windshield 28 is located higher than the forwardmost point of the windshield 28 and higher than the rearmost points of the upper support cover 26. This provides a sufficient level of the windshield effect of the windshield 28.

Although an embodiment of the present invention has been described, the above-illustrated embodiment is merely an example for carrying out the present invention. Therefore, the present invention is not limited to the above-illustrated embodiment.

For example, the above-illustrated embodiment was described where a motorcycle was discussed as an example of the straddled vehicle; alternatively, the straddled vehicle may be a leaning vehicle where the vehicle body can lean toward the direction to which the vehicle turns. The straddled vehicle may have one front wheel or two front wheels. The straddled vehicle may have one rear wheel or two rear wheels.

It will be appreciated that the term straddled vehicle or motor vehicle used herein, and as used in the art, is meant to include at least the following terms also used in the art:
straddled vehicle, straddle-type vehicle or motor vehicle, saddle-straddling type vehicle or motor vehicle, and includes: motorcycles and motorbikes as well as motor tricycles, quad bikes and All Terrain Vehicles (ATVs), scooters, mopeds and snowmobiles.

## Claims

1. A straddled vehicle, such as a motorcycle (10), comprising:
a vehicle-body frame(15);
a headlight (24);
an upper front cover (141) having a central portion, at least part of the upper front cover being located higher than the headlight as viewed from a front of the vehicle;
an upper support cover (26) attached to the upper front cover (141), at least a part of the upper support cover being located higher than the upper front cover (141) as viewed from the front of the vehicle; and
a windshield (28) attached to the upper support cover, at least a part of the windshield being located higher than the upper support cover as viewed from the front of the vehicle,
wherein at least a part of the upper support cover overlaps the upper front cover (141) as viewed from a top of the vehicle and is located higher than the upper front cover (141),
at least a part of the windshield overlaps the upper support cover as viewed from the top of the vehicle,
as viewed from the top of the vehicle, a forwardmost point (8f) of the windshield is located rearward of a forwardmost point (6f) of the upper support cover, and
a rearmost point (8r) of the windshield is located higher than the forwardmost point of the windshield and is located higher than a rearmost point (6r) of the upper support cover, **characterized in that**
the upper front cover is attached to the vehicle body frame;
the part of the windshield is located higher than the upper support cover;
the central portion of the upper front cover includes a pair of attachment portions located to the left and right;
the upper support cover includes a pair of attachment portions located to left and right, wherein the left and right attachment portions are located at the rear of the upper support *cover protrude from the outer surface of the central portion, are positioned to be mirror images of each other, are formed integrally with the central portion, and includes one of the rearmost points of the upper support cover;*
at least a part of each of the left and right attachment portions of the upper support cover is located higher than the left and right attachment portions of the upper front cover; and
a front portion of the windshield is screwed on the pair of attachment portions of the upper front cover and a rear portion of the windshield is screwed on the pair of the attachment portions of the upper support cover.

2. The straddled vehicle according to claim 1, wherein the forwardmost point of the upper support cover is located at a center of a front edge of the upper support cover as determined along a left-right direction of the vehicle, and
the forwardmost point of the windshield is located at a center of a front edge of the windshield as determined along the left-right direction of the vehicle.

3. The straddled vehicle according to claim 1 or 2, wherein, as viewed from the top of the vehicle, at least a part of the upper support cover overlaps the headlight from above.

4. The straddled vehicle according to any one of claims 1 to 3, wherein, as viewed from the front of the vehicle, at least a part of the headlight is located at a center (CL) of the vehicle as determined along a left-right direction of the vehicle.

5. The straddled vehicle according to any one of claims 1 to 4, wherein an outer edge of the upper support cover as viewed from the top of the vehicle includes a first edge portion overlapping the upper front cover from above,
a gap is provided as determined along a top-bottom direction of the vehicle between at least a portion of the first edge portion and an outer surface of the upper front cover,
an outer edge of the windshield as viewed from the top of the vehicle includes a second edge portion overlapping one of the upper support cover and the upper front cover from above, and
a gap is provided as determined along the top-bottom direction of the vehicle between at least a portion of the second edge portion and an outer surface of the one of the upper support cover and the upper front cover overlapping the second edge portion as viewed from the top of the vehicle.

6. The straddled vehicle according to claim 5, wherein the second edge portion overlaps the upper support cover as viewed from the top of the vehicle, and
a gap is provided as determined along the top-bottom direction of the vehicle between at least a part of the second edge portion and the outer surface of the upper support cover.

## Patentansprüche

1. Grätschsitzfahrzeug, zum Beispiel ein Motorrad (10), umfassend:
einen Fahrzeugkarosserierahmen (15);
einen Scheinwerfer (24);
eine obere Frontabdeckung (141) mit einem Mittelabschnitt, wobei mindestens ein Teil der oberen Frontabdeckung höher angeordnet ist als der Scheinwerfer, wenn von vorne auf das Fahrzeug gesehen;
eine obere Stützabdeckung (26), welche an der oberen Frontabdeckung (141) befestigt ist, wobei mindestens ein Teil der oberen Stützabdeckung höher angeordnet ist als die obere Frontabdeckung (141), wenn von vorne auf das Fahrzeug gesehen; und
eine Windschutzscheibe (28), welche an der oberen Stützabdeckung befestigt ist, wobei mindestens ein Teil der Windschutzscheibe höher angeordnet ist als die obere Stützabdeckung, wenn von vorne auf das Fahrzeug gesehen,
wobei mindestens ein Teil der oberen Stützabdeckung die obere Frontabdeckung (141) überlappt, wenn von oben auf das Fahrzeug gesehen, und höher als die obere Frontabdeckung (141) angeordnet ist,
mindestens ein Teil der Windschutzscheibe die obere Stützabdeckung überlappt, wenn von oben auf das Fahrzeug gesehen,
wenn von oben auf das Fahrzeug gesehen, ist ein vorderster Punkt (8f) der Windschutzscheibe hinter einem vordersten Punkt (6f) der oberen Stützabdeckung angeordnet, und
wobei ein hinterster Punkt (8r) der Windschutzscheibe höher als der vorderste Punkt der Windschutzscheibe und höher als ein hinterster Punkt (6r) der oberen Stützanordnung angeordnet ist, **dadurch gekennzeichnet, dass**
die obere Frontabdeckung an dem Fahrzeugkarosserierahmen befestigt ist;
der Teil der Windschutzscheibe höher als die obere Stützabdeckung angeordnet ist;
der Mittelabschnitt der oberen Frontabdeckung ein Paar von Befestigungsabschnitten umfasst, welche links und rechts angeordnet sind;
die obere Stützabdeckung ein Paar von Befestigungsabschnitten umfasst, welche links und rechts angeordnet sind, wobei der linke und der rechte Befestigungsabschnitt hinter der oberen Stützabdeckung angeordnet sind, von der Außenfläche des Mittelabschnitts vorstehen, zueinander spiegelbildlich angeordnet sind, einstückig mit dem Mittelabschnitt geformt sind, und einen der hintersten Punkte der oberen Stützabdeckung umfasst;
mindestens ein Teil jedes des linken und rechten Befestigungsabschnitts der oberen Stützabdeckung höher angeordnet ist als der linke und rechte Befestigungsabschnitt der oberen Frontabdeckung; und
ein Frontabschnitt der Windschutzscheibe auf das Paar von Befestigungsabschnitten der oberen Frontabdeckung aufgeschraubt ist und ein hinterer Abschnitt der Windschutzscheibe auf das Paar von Befestigungsabschnitten der oberen Stützabdeckung aufgeschraubt ist.

2. Grätschsitzfahrzeug nach Anspruch 1, wobei der vorderste Punkt der oberen Stützabdeckung im Mittelpunkt einer Frontkante der oberen Stützabdeckung angeordnet ist, wie entlang einer Links-Rechts-Richtung des Fahrzeugs bestimmt, und
der vorderste Punkt der Windschutzscheibe im Mittelpunkt einer Vorderkante der Windschutzscheibe angeordnet ist, wie entlang der Links-Rechts-Richtung des Fahrzeugs bestimmt.

3. Grätschsitzfahrzeug nach Anspruch 1 oder 2, wobei, wenn von oben auf das Fahrzeug gesehen, mindestens ein Teil der oberen Stützabdeckung den Scheinwerfer von oben überlappt.

4. Grätschsitzfahrzeug nach einem der Ansprüche 1 bis 3, wobei, wenn von vorne auf das Fahrzeug gesehen, mindestens ein Teil des Scheinwerfers in einem Mittelpunkt (CL) des Fahrzeugs angeordnet ist, wie entlang der Links-Rechts-Richtung des Fahrzeugs bestimmt.

5. Grätschsitzfahrzeug nach einem der Ansprüche 1 bis 4, wobei eine Außenkante der oberen Stützabdeckung, wenn von oben auf das Fahrzeug gesehen, einen ersten Kantenabschnitt umfasst, welcher die obere Frontabdeckung von oben überlappt,
ein Spalt zwischen mindestens einem Abschnitt des ersten Kantenabschnitts und einer Außenfläche der oberen Frontabdeckung bereitgestellt ist, wie entlang einer Oben-Unten-Richtung des Fahrzeugs bestimmt,
eine Außenkante der Windschutzscheibe einen zweiten Kantenabschnitt umfasst, welcher eine der oberen Stützabdeckung und der oberen Frontabdeckung von oben überlappt, wenn von oben auf das Fahrzeug gesehen, und
ein Spalt zwischen mindestens einem Abschnitt des zweiten Kantenabschnitts und einer Außenfläche der einen der oberen Stützabdeckung und der oberen Frontabdeckung bereitgestellt ist, wie entlang der Oben-Unten-Richtung des Fahrzeugs bestimmt, welche den zweiten Kantenabschnitt überlappt, wenn von oben auf das Fahrzeug gesehen.

6. Grätschsitzfahrzeug nach Anspruch 5, wobei der zweite Kantenabschnitt die obere Stützabdeckung überlappt, wenn von oben auf das Fahrzeug gesehen, und
ein Spalt zwischen mindestens einem Teil des zweiten Kantenabschnitts und der Außenfläche der oberen Stützabdeckung bereitgestellt ist, wie entlang der Oben-Unten-Richtung des Fahrzeugs bestimmt.

## Revendications

1. Véhicule à enfourcher, par exemple motocycle (10), comprenant :
un cadre de châssis du véhicule (15) ;
un phare (24) ;
un capot frontal supérieur (141) comportant une partie centrale, au moins une partie du capot frontal supérieur étant agencée en une position plus élevée que le phare, vue de l'avant du véhicule ;
un capot de support supérieur (26) fixé sur le capot frontal supérieur (141), au moins une partie du capot de support supérieur étant agencée en une position plus élevée que le capot frontal supérieur (141), vue de l'avant du véhicule ; et
un pare-brise (28) fixé sur le capot de support supérieur, au moins une partie du pare-brise étant agencée en une position plus élevée que le capot de support supérieur, vue de l'avant du véhicule ;
dans lequel au moins une partie du capot de support supérieur chevauche le capot frontal supérieur (141), vue du dessus du véhicule, et est agencée en une position plus élevée que le capot frontal supérieur (141 ;
au moins une partie du pare-brise chevauche le capot de support supérieur, vue du dessus du véhicule ;
vu du dessus du véhicule, un point avant extrême (8f) du pare-brise est situé vers l'arrière d'un point avant extrême (6f) du capot de support supérieur ; et
un point arrière extrême (8r) du pare-brise est situé en une position plus élevée que le point avant extrême du pare-brise et est situé en une position plus élevée qu'un point arrière extrême (6r) du capot de support supérieur ; **caractérisé en ce que** :
le capot frontal supérieur est fixé sur le cadre de châssis du véhicule ;
la partie du pare-brise est agencée en une position plus élevée que le capot de support supérieur ;
la partie centrale du capot frontal supérieur inclut une paire de parties de fixation agencées à gauche et à droite ;
le capot de support supérieur inclut une paire de parties de fixation agencées à gauche et à droite, dans lequel les parties de fixation de gauche et de droite sont agencées à l'arrière du capot de support supérieur, débordent de la surface externe de la partie centrale, sont positionnées de sorte à constituer des images symétriques l'une de l'autre, sont formées d'une seule pièce avec la partie centrale, et incluent un des points arrière extrêmes du capot de support supérieur ;
au moins une partie de chacune des parties de fixation de gauche et de droite du capot de support supérieur est agencée à une position plus élevée que les parties de fixation de gauche et de droite, du capot frontal supérieur ; et
une partie avant du pare-brise est vissée sur la paire de parties de fixation du capot frontal supérieur, et une partie arrière du pare-brise est vissée sur la paire de parties de fixation du capot de support supérieur.

2. Véhicule à enfourcher selon la revendication 1, dans lequel le point avant extrême du capot de support supérieur est situé dans un centre d'un bord avant du capot de support supérieur, comme déterminé le long d'une direction allant de la gauche vers la droite du véhicule ; et
le point avant extrême du pare-brise est situé dans un centre d'un bord avant du pare-brise, comme déterminé le long de la direction allant de la gauche vers la droite du véhicule.

3. Véhicule à enfourcher selon les revendications 1 ou 2, dans lequel, vue du dessus du véhicule, au moins une partie du capot de support supérieur chevauche le phare d'en haut.

4. Véhicule à enfourcher selon l'une quelconque des revendications 1 à 3, dans lequel, vue de l'avant du véhicule, au moins une partie du phare est agencée dans un centre (CL) du véhicule, comme déterminé le long d'une direction allant de la gauche vers la droite du véhicule.

5. Véhicule à enfourcher selon l'une quelconque des revendications 1 à 4, dans lequel un bord externe du capot de support supérieur, vu du dessus du véhicule, inclut une première partie de bordure chevauchant le capot frontal supérieur d'en haut ;
un espace est formé, comme déterminé le long d'une direction allant du haut vers le bas du véhicule, entre au moins une partie de la première partie de bordure et une surface externe du capot de support supérieur ;
un bord externe du pare-brise, vu du dessus du véhicule, inclut une deuxième partie de bordure chevauchant l'un parmi le capot de support supérieur et le capot frontal supérieur, d'en haut ; et
un espace est formé, comme déterminé le long de la direction allant du haut vers le bas du véhicule, entre au moins une partie de la deuxième partie de bordure et une surface externe de l'un parmi le capot de support supérieur et le capot frontal supérieur, chevauchant la deuxième partie de bordure, vue du dessus du véhicule.

6. Véhicule à enfourcher selon la revendication 5, dans lequel la deuxième partie de bordure chevauche le capot de support supérieur, vue du dessus du véhicule ; et
un espace est formé, comme déterminé le long de la direction allant du haut vers le bas du véhicule, entre au moins une partie de la deuxième partie de bordure et la surface externe du capot de support supérieur.
